# EUROPÄISCHE PATENTANMELDUNG

(11) **EP 1 245 268 A2**
(43) Veröffentlichungstag der Anmeldung: **02.10.2002**
(21) Anmeldenummer: 01130050.6
(22) Anmeldetag: 18.12.2001
(51) Int. Cl.: B01D 53/48

(54) **Verfahren und Vorrichtung zum Entfernen von Schwefelverbindungen aus einem Gasstrom**

(30) Priorität: 28.03.2001 DE 10115220
(71) Anmelder: ROBERT BOSCH GMBH, 70442 Stuttgart (DE)
(72) Erfinder: Breuer, Norbert, Dr., 71254 Ditzingen (DE); Waidner, Jürgen, 73274 Notzingen (DE); Schiller, Christian, Dr., 70771 Leinfelden-Echterdingen (DE); Lehr, Walter, Dr., 70499 Stuttgart (DE); Hebner, Thomas, 70195 Stuttgart (DE)

(57) **Zusammenfassung**

Es wird ein Verfahren und eine Vorrichtung zum Entfernen von Schwefelverbindungen aus einem Gasstrom, der einer Brennkammer einer Gastherme zugeführt wird, beschrieben, wobei der Gasstrom vor dem Eintritt in die Brennkammer der Gastherme über Schwefel aufnehmendes Material geleitet wird.

## Beschreibung

### Stand der Technik

Die vorliegende Erfindung bezieht sich auf ein Verfahren und eine Vorrichtung zum Entfernen von Schwefelverbindungen aus einem Gasstrom, der einer Brennkammer einer Gastherme zugeführt wird.

Aus der US 5,354,362 ist ein Verfahren zum Filtern eines Erdgasstromes benachbart zu dem Verbraucher, bei dem mindestens ein Gasgerät vorgesehen ist, bekannt, wobei in dem Erdgasstrom Odorierungsmittel hinreichend konzentriert werden, und so signifikant gesundheits- und/oder umweltgefährdend sind. Odorierungsmittel ist die Bezeichnung für Mittel, die als Warn- oder Alarmstoffe zu ansonsten geruchslosen Gasen zugesetzt werden, um Gasunfälle möglichst zu vermeiden und undichte Stellen im Rohrleitungssystem leichter entdecken zu können.

Dieses US-Patent beschreibt ein Verfahren zur Entfernung von Odorierungsmitteln, die bis zu einem bestimmten Pegel konzentriert wurden, aus Erdgas, das für Hausanwendungen verwendet werden soll. Dabei werden diese Verbindungen zumindest an Aktivkohle adsorbiert. Eine solche Adsorption von Odorierungsmittel ab einem bestimmten Odorierungsgmittelgehalt wird durchgeführt, damit beim Betrieb eines Gasverteilernetzes, bei dem es zur Aufkonzentration dieser Verbindungen bis zu toxischen Werten kommen kann, diese Odorierungsmittel nicht zu einer Gesundheitsgefährdung oder Umweltbelastung führen. Es wird dabei also ein Schutz des Verbrauchers und der Umgebung vor einer zu hohen Konzentration an Odorierungsmitteln bereitgestellt.

Daneben ist es aus dem Patent US 5,769,909 bekannt, Schwefel und Schwefelverbindungen aus einem Gasstrom, wie einem Kohlenwasserstoff-Kraftstoffgasstrom zu entfernen, und dadurch einen für die Verwendung in einem Brennstoffzellenkraftwerk geeigneten Gasstrom zu erhalten. Hierzu treten Abgas und rezyklisierter Wasserstoff in die Hydroentschwefelungsanordnung bei einer Temperatur von etwa 120°F (≈ 49°C) ein. Der Gasstrom wird auf eine Temperatur von 625°F (≈ 329°C) erwärmt, wobei er in ein Entschwefelungsbett eintritt, das aus einer Mischung eines Platinkatalysators, der auf Alluminiumpellets abgelagert ist, mit einem pelletierten Zinkoxid-Wasserstoffsulfid-Absorptionsmittel gebildet wird. Das Gas wird auf eine Austrittstemperatur von etwa 525°F (≈ 274°C) abgekühlt, wobei es das Entschwefelungsbett durchläuft. Das Entschwefelungsbett wird mit einem Schaltumwandler kombiniert, der die Kohlenstoffmonoxide in dem entschwefelten Gasstrom reduziert, nachdem letzterer ein Dampfreformierbett durchlaufen hat.

In diesem US-Patent wird also ein Verfahren beschrieben, bei dem in Brennstoffzellen mit Hilfe von Metallverbindungen, insbesondere Zinkoxid, und Wasserstoff Schwefelverbindungen zu H₂S umgewandelt werden.

Zur Versorgung von Einfamilienhäusern, Etagenwohnungen, usw. mit Warmwasser sowie für den Betrieb von Zentralheizungen haben in den letzten Jahren Systeme, die mit Erdgas betrieben werden, an Bedeutung gewonnen. Der grundsätzliche Aufbau sowie die Funktionsweise von solchen sogenannten Gasthermen oder Heizwertthermen, welche seit Jahren etabliert eingesetzt werden, sind dem Fachmann auf diesem Gebiet bekannt und bedürfen daher keiner weiteren Erläuterung.

Neben den wesentlichen brennbaren Bestandteilen des Erdgases Methan sowie Ethan, das bei einer Gastherme verwendet wird, befinden sich bekanntlich weitere Verbindungen in dem Gasstrom. Besondere Bedeutung kommen dabei den schwefelhaltigen Bestandteilen, wie beispielsweise Schwefelwasserstoff, Thiolen (R-SH), Dithiolen (R-SS-R) oder THT (Tetrahydrothiophen) zu, da diese während des Verbrennungsprozesses in der Brennkammer der Gastherme hoch oxidiert werden. Es entstehen dabei die Produkte SO₂ und SO₃, die eine besondere korrosive Wirkung bei Temperaturen unter 100°C haben, da diese Produkte nach Reaktion mit kondensiertem Wasser schwefelige Säure beziehungsweise Schwefelsäure bilden und dadurch Korrosion an verschiedensten Komponenten der Gastherme hervorrufen können.

Hauptsächlich ist dabei meist der Wärmeüberträger beziehungsweise Wärmetauscher von derartigen Korrosionsproblemen betroffen. In marktüblichen Gasthermen-Geräten gibt es aber keine Schutzmaßnahmen zur Unterdrückung oder zumindest Verringerung dieses Phänomens des Bildens von korrosiven Medien. Bisher wurden daher zum Schutz entweder dicke, das heißt sehr schwere und damit auch teure, Wandstärken des Wärmetauschers in der Gastherme vorgesehen oder aber ebenfalls kostenintensive Korrosionsschutzschichten auf die entsprechenden, vor Korrosion zu schützenden Teile der Gastherme aufgebracht.

In herkömmlichen, üblicherweise eingesetzten Gasthermen kann es neben dem Problem der Korrosion an sich durch die Ausbildung von Korrosionsprodukten bei der Korrosion auch noch zum Zusetzen von Kanälen hinter der Verbrennungskammer kommen. Dann reichen häufig die üblichen Drücke in dem System nicht mehr zu einem effektiven Gastransport durch die Gastherme aus. Es werden dann Wartungsarbeiten an der Gastherme notwendig.

### Vorteile der Erfindung

Das vorgeschlagene Verfahren zum Entfernen von Schwefelverbindungen aus einem Gasstrom mit den Merkmalen nach dem Oberbegriff des Patentanspruches 1, bei dem der Gasstrom vor dem Eintritt in die Brennkammer der Gastherme über Schwefel aufnehmendes Material geleitet wird, hat den Vorteil, daß nun schwefelhaltige Bestandteile des Erdgases durch Aufnahme in einer Art Speicher entfernt werden können. Dadurch kann die Lebensdauer der einzelnen Komponenten der Gastherme und damit auch die Standzeit der Gastherme erhöht werden, da diese schwefelhaltigen Bestandteile wesentlich zur internen Korrosion der Gastherme und insbesondere des Wärmetauschers beitragen.

In der Folge treten Korrosionsprobleme in der Gastherme in geringerer Form auf, wodurch bei Verwendung der Baumaterialien des Standes der Technik die Standzeit des Gesamtsystems verlängert wird und Wartungsintervalle weniger häufig erforderlich werden. Dies führt betrachtet auf die Lebensdauer der Gastherme zu einer erheblichen Kostenminimierung.

Mit der vorliegenden Erfindung wird auch vorteilhafterweise dem Problem begegnet, daß es bei den herkömmlichen Heizwertthermen durch Ausbildung von Korrosionsprodukten zum Zusetzen von Kanälen hinter der Verbrennungskammer kommen kann, so daß übliche Drücke in dem System nicht mehr zu einem effektiven Gastransport durch die Gastherme ausreichen. Bei Verwendung eines Verfahrens gemäß der vorliegenden Erfindung werden nämlich schwefelhaltige Verbindungen vor dem Eintritt des Erdgasstromes in die Brennkammer entfernt, so daß kaum mehr Korrosionsprodukte entstehen, die Kanäle hinter der Brennkammer der Gastherme zusetzen können.

Es hat sich gezeigt, daß es vorteilhaft sein kann, wenn der Gasstrom bei Temperaturen kleiner als 100°C über das Schwefel aufnehmende Material geleitet wird, damit möglichst viel Schwefel adsorbiert oder absorbiert werden kann.

In einer vorteilhaften Ausgestaltung des Verfahrens kann vorgesehen sein, daß das Schwefel aufnehmende Material während des Betriebs der Gastherme bei einer Temperatur größer als 100°C intern wieder regeneriert wird. Wenn nämlich Temperaturen von mehr als 100°C erreicht werden, entfalten die dann freigesetzten Schwefeloxide nur eine geringe korrosive Wirkung.

Daneben kann es jedoch gemäß einer weiteren bevorzugten Ausführungsform auch vorgesehen sein, daß die schwefelhaltigen Verbindungen permanent aus dem Gasstrom entfernt werden und das Schwefel adsorbierende Material nach Erreichen seiner maximalen Aufnahmekapazität für die schwefelhaltigen Verbindungen entfernt und danach erneuert wird.

Das Schwefel aufnehmende Material, das nach seiner maximalen Aufnahmekapazität entfernt wurde, kann entsorgt oder gegebenenfalls extern regeneriert und dann wieder eingesetzt werden.

Die vorliegende Erfindung bezieht sich ebenso auf eine Vorrichtung zum Entfernen von Schwefelverbindungen aus einem Gasstrom, wobei die Vorrichtung insbesondere dazu geeignet ist, bei einem oben näher beschriebenen Verfahren eingesetzt zu werden.

Eine derartige Vorrichtung zum Entfernen von Schwefelverbindungen aus einem Gasstrom, der einer Brennkammer einer Gastherme zugeführt wird, zeichnet sich dadurch aus, daß in der Gasführung zumindest vor der Brennkammer der Gastherme eine Einrichtung mit Schwefel aufnehmendem Material vorgesehen ist.

Dabei ist es vorteilhaft, wenn das Schwefel adsorbierende oder absorbierende Material in einem Reaktor untergebracht ist, der vor der Brennkammer in die Apparatur der Gastherme integriert ist.

Ein derartiger Reaktor kann dabei in Form eines Speichers vorgesehen sein, der die schwefelhaltigen Verbindungen permanent aus dem Gasstrom entfernt. Dieser Reaktor sollte dann auswechselbar in der Gastherme angeordnet sein, so daß er nach Erreichen seiner maximalen Aufnahmekapazität auf einfache Weise aus der Gastherme entfernt und durch einen neuen Reaktor ersetzt werden kann. Der ersetzte Reaktor bzw. die ersetzte Speichereinheit kann entweder entsorgt werden oder auch regeneriert werden und später wieder in die Gastherme eingesetzt werden.

Grundsätzlich hat es sich als vorteilhaft erwiesen, wenn das Schwefel aufnehmende Material ein Schüttgut ist, wobei sich insbesondere Metalloxide, wie z.B. ZnO, in Form von Pellets als vorteilhaft erwiesen haben, da diese Verbindungen darstellen, die auch schwer lösliche Sulfide bzw. Thiole binden.

Insbesondere bei einer permanenten Schwefelaufnahme sind als Schwefel adsorbierende Materialien Verbindungen vorteilhaft, die eine starke Schwefeladaption an der Oberfläche erlauben, wie z.B. Materialien mit Aktivkohle und/oder Zeolithen.

Falls eine interne Regenerierung des Schwefel aufnehmenden Materiales erfolgen soll, eignen sich als aktives Material Verbindungen mit der Möglichkeit zur Adsorption von Schwefelwasserstoff sowie Thiolen, Dithiolen, etc., wobei auch hier Aktivkohle ein sehr geeignetes Material darstellt.

Weitere Vorteile und vorteilhafte Weiterbildungen des Gegenstandes nach der Erfindung ergeben sich aus der Beschreibung, der Zeichnung und den Patenansprüchen.

### Zeichnung

Einige Ausführungsbeispiele einer erfindungsgemäßen Vorrichtung sind in der Zeichnung schematisch vereinfacht dargestellt und werden in der nachfolgenden Beschreibung näher erläutert. Es zeigen dabei
Figur 1a) eine Gastherme ohne Schwefel aufnehmendes Material und Figur 1b) eine Gastherme mit Schwefel aufnehmendem Material, um den Unterschied zwischen der Erfindung und dem Stand der Technik darzulegen;
Figur 2 eine teilweise geschnittene Darstellung eines vor einer Brennkammer angeordneten und austauschbaren Reaktors;
Figur 3 einen Reaktor mit aktivem Material, das in der Gastherme regeneriert werden kann; und
Figur 4 die Anordnung eines weiteren Reaktors in der Gastherme mit aktivem Material, das intern regeneriert werden kann.

In der Zeichnung werden dabei für sich entsprechende Elemente die gleichen Bezugszeichen verwendet.

### Beschreibung der Ausführungsbeispiele

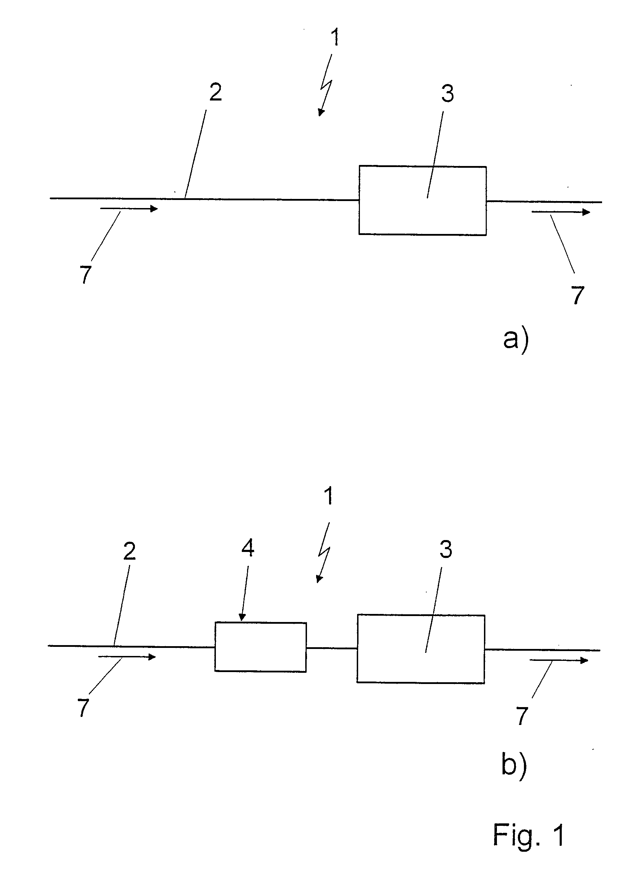

Bezug nehmend auf Figur 1a) ist eine herkömmliche Gastherme 1, bei der üblicherweise Erdgas, das unter anderem schwefelhaltige Verbindungen, wie beispielsweise Thiole, aufweist, über eine Leitung 2 einer Brennkammer 3 zugeführt wird. Die Strömungsrichtung des Gases ist dabei durch den Pfeil 7 dargestellt.

Die im Gas enthaltenen Thiole bilden bei der Verbrennung in der Brennkammer 3 SO_{X,} also Schwefeloxide, die mit Wasser, wie beispielsweise Kondenswasser der Brennkammer, schwefelige Säure beziehungsweise Schwefelsäure bilden können. Aus diesem Grund muß ein der Brennkammer 3 angeschlossener Wärmetauscher aus entsprechenden Materialien ausgebildet sein, damit er nicht durch die gebildeten Säuren angegriffen wird.

Wird nun der Brennkammer 3 gemäß einer bevorzugten, in der Figur 1b, dargestellten Ausführungsform der vorliegenden Erfindung eine Einrichtung 4 mit Schwefel adsorbierendem Material 6 als Zusatzmodul vorgeschaltet, so weist das aus der Brennkammer 3 austretende Gas keinen nennenswerten Gehalt an Schwefeloxiden mehr auf.

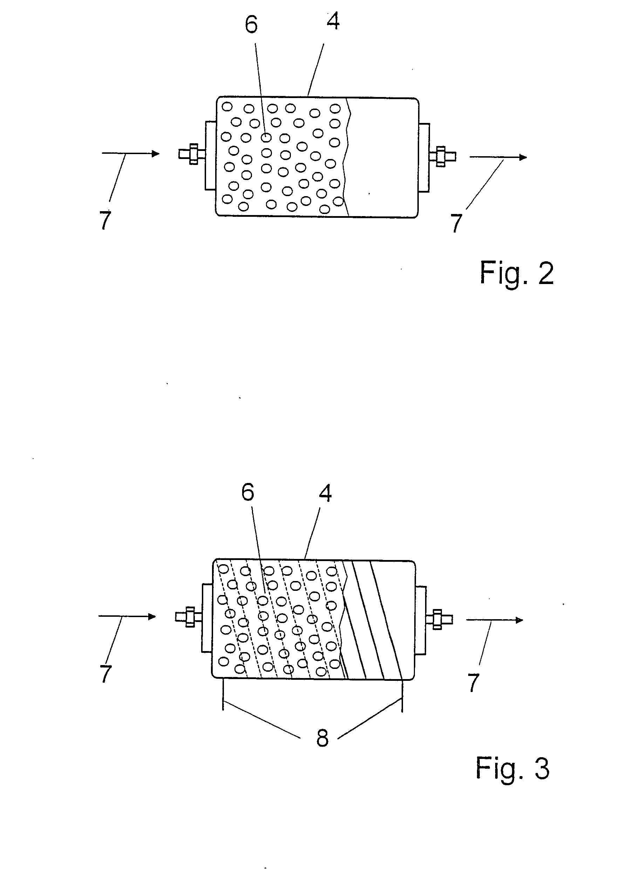

Dieses Zusatzmodul 4 kann ein austauschbares Modul darstellen, wie es beispielsweise in Figur 2 gezeigt ist. Das Zusatzmodul 4 ist hier als ein Reaktor ausgebildet, in den aktives, Schwefel adsorbierendes Material 6 eingebracht ist. Als aktives Material 6 wird gemäß der in Figur 2 gezeigten bevorzugten Ausführungsform Zinkoxid (ZnO) in Form von Pellets verwendet. Das ZnO reagiert dann mit H₂S aus dem Erdgasstrom 7 zu ZnS und H₂O. Nach dem Erreichen seiner maximalen Aufnahmekapazität für schwefelhaltige Verbindungen oder nach einer bestimmten Betriebsdauer wird dieses Zusatzmodul 4 ausgetauscht.

Die Figur 3 zeigt demgegenüber einen Reaktor 4, bei dem eine Regeneration des Schwefel adsorbierenden, aktiven Materials 6 während des Betriebs der Gastherme 1, d.h. bei Temperaturen über 100°C erfolgt. Vorliegend dienen als aktives Material 6 Verbindungen, bei denen nach Zufuhr von Energie und einem Überschreiten einer bestimmten Adsoptionsenergie eine Desorption der schwefelhaltigen Verbindungen erfolgt, so daß eine erneute Beladung des aktiven Materials 6 möglich ist.

Wie in Figur 3 ersichtlich ist, durchwandert das Erdgas, dessen Strömungsrichtung wieder durch den Pfeil 7 dargestellt ist, das Schwefel adsorbierende Material 6 in dem Reaktor 4 bei der Zufuhr des Gases in die Brennkammer 3. Zur Realisierung des temperaturabhängigen Regenerationszyklus, bei dem Energie in das aktive Material 6 eingebracht werden muß, weist der Reaktor 4 als Heizeinrichtung hier eine Heizwendel 8 auf, mittels der das aktive Material 6 zur Desorption der Schwefelverbindungen aufgeheizt werden kann.

Alternativ hierzu kann die Energieeinbringung in das aktive Material 6 auch durch eine thermische Ankopplung des Schwefel adsorbierenden Materials 6 an den Brennraum 3, in dem entsprechende Wärmemengen während des Betriebs frei werden, erfolgen.

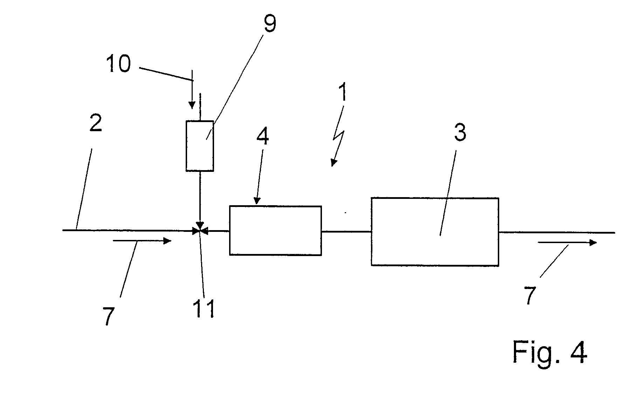

In der Figur 4 ist eine weitere Ausführungsmöglichkeit eines Reaktors 4 mit interner Regeneration des Schwefel adsorbierenden Materials 6 dargestellt, wobei hier Metalloxide als aktives Material 6 verwendet werden.

In diesem Fall ist eine Zuführung von Sauerstoff zur Regenerierung des Schwefel adsorbierenden Materials 6 erforderlich, weshalb als Einrichtung zur Sauerstoffzufuhr ein Gebläse 9 in der Gasführung vor dem Reaktor 4 zuschaltbar angeordnet ist. Damit wird der Sauerstoff auf einfache Weise als Bestandteil der Umgebungsluft in Richtung des in der Figur 4 ersichtlichen Pfeiles 10 dem Gasstrom der Leitung 2 über das Gebläse 9 zugeführt.

Um eine selektive Zuführung von Gas und/oder Luft erreichen zu können, sind gemäß der in Figur 4 dargestellten Ausführungsform der vorliegenden Erfindung Ventile bzw. Absperrhähne 11 vorgesehen. Da die Sauerstoffzahl in der Brennkammer konstant bleiben soll, ist zudem eine nicht näher dargestellte Regelung vorgesehen, über die die Zufuhr von Luft bei der Umsetzung des Erdgases gegebenenfalls entsprechend verringert werden kann. Auch bei diesem Regenerierprozeß können die Schwefeloxide aus dem Modul leicht, schnell und möglichst vollständig wieder entfernt werden.

## Patentansprüche

1. Verfahren zum Entfernen von Schwefelverbindungen aus einem Gasstrom, der einer Brennkammer (3) einer Gastherme (1) zugeführt wird, **dadurch gekennzeichnet, daß** der Gasstrom vor dem Eintritt in die Brennkammer (3) der Gastherme (1) über Schwefel aufnehmendes Material (6) geleitet wird.

2. Verfahren nach Anspruch 1, **dadurch gekennzeichnet, daß** der Gasstrom bei Temperaturen kleiner einem Wert von wenigstens annähernd 100°C über das Schwefel aufnehmende Material (6) geleitet wird.

3. Verfahren nach Anspruch 1 oder 2, **dadurch gekennzeichnet, daß** das Schwefel aufnehmende Material (6) während eines Betriebs der Gastherme (1) bei einer Temperatur oberhalb eines Wertes von wenigstens annähernd 100°C regeneriert wird.

4. Verfahren nach Anspruch 2, **dadurch gekennzeichnet, daß** das Schwefel aufnehmende Material (6), insbesondere Metalloxid aufweisendes Material, unter geregelter Zufuhr von Sauerstoff während des Betriebs der Gastherme (1) regeneriert wird.

5. Verfahren nach Anspruch 1, **dadurch gekennzeichnet, daß** das Schwefel aufnehmende Material (6) nach dem Erreichen seiner Aufnahmekapazität oder einer vorbestimmten Betriebsdauer entfernt und erneuert wird.

6. Verfahren nach Anspruch 5, **dadurch gekennzeichnet, daß** das Schwefel aufnehmende Material (6) nach Erreichen seiner maximalen Aufnahmekapazität und nach Entfernen extern regeneriert wird.

7. Vorrichtung zum Entfernen von Schwefelverbindungen aus einem Gasstrom, der einer Brennkammer (3) einer Gastherme (1) zugeführt wird, **dadurch gekennzeichnet, daß** in der Gasführung zumindest vor der Brennkammer (3) der Gastherme (1) eine Einrichtung (4) mit Schwefel aufnehmendem Material (6) vorgesehen ist.

8. Vorrichtung nach Anspruch 7, **dadurch gekennzeichnet, daß** die das Schwefel aufnehmende Material (6) enthaltende Einrichtung als ein Reaktor (4) ausgebildet ist.

9. Vorrichtung nach einem der Ansprüche 7 oder 8, **dadurch gekennzeichnet, daß** der Reaktor (4) auswechselbar in der Gastherme (1) angeordnet ist.

10. Vorrichtung nach Anspruch 7 oder 8, **dadurch gekennzeichnet, daß** ein temperaturabhängiger Regenerationszyklus für das Schwefel aufnehmende Material (6) während des Betriebs der Gastherme (1) vorgesehen ist.

11. Vorrichtung nach Anspruch 10, **dadurch gekennzeichnet, daß** zur Realisierung des temperaturabhängigen Regenerationszyklus eine Heizeinrichtung (8) im Bereich der das Schwefel aufnehmende Material (6) enthaltenden Einrichtung (4) vorgesehen ist.

12. Vorrichtung nach Anspruch 7 oder 8, **dadurch gekennzeichnet, daß** zur Regenerierung des Schwefel aufnehmenden Materials (6) eine Sauerstoff-Zufuhreinrichtung vorgesehen ist, die in der Gasführung vor der das Schwefel aufnehmende Material enthaltenden Einrichtung (4) zuschaltbar angeordnet ist.

13. Vorrichtung nach einem der Ansprüche 7 bis 12, **dadurch gekennzeichnet, daß** das Schwefel aufnehmende Material (6) Schüttgut ist.

14. Vorrichtung nach einem der Ansprüche 7 bis 13, **dadurch gekennzeichnet, daß** das Schwefel aufnehmende Material (6) Metalloxid, insbesondere in Form von Pellets, aufweist.

15. Vorrichtung nach einem der Ansprüche 7 bis 14, **dadurch gekennzeichnet, daß** das Schwefel aufnehmende Material (6) Aktivkohle und/oder Zeolithen aufweist.
